# EUROPÄISCHE PATENTSCHRIFT

(11) **EP 0 866 920 B1**
(45) Veröffentlichungstag und Bekanntmachung des Hinweises auf die Patenterteilung: **28.03.2001**
(21) Anmeldenummer: 96939796.7
(22) Anmeldetag: 09.12.1996
(51) Int. Cl.: F15D 1/12

(54) **VERFAHREN ZUR AUSBILDUNG EINER OBERFLÄCHE FÜR DEN KONTAKT MIT EINEM STRÖMENDEN FLUID UND KÖRPER MIT ENTSPRECHEND AUSGEBILDETEN OBERFLÄCHENBEREICHEN**
PROCESS FOR FORMING A SURFACE FOR CONTACT WITH A FLOWING FLUID AND BODY WITH SUCH SURFACE REGIONS
PROCEDE DE REALISATION D'UNE SURFACE PERMETTANT LE CONTACT AVEC UN FLUIDE EN CIRCULATION ET CORPS COMPORTANT DES ZONES SUPERFICIELLES DE CE TYPE

(30) Priorität: 12.12.1995 CH 349695
(43) Veröffentlichungstag der Anmeldung: 30.09.1998
(73) Patentinhaber: LA ROCHE, Ulrich, CH-8053 Zürich (CH)
(72) Erfinder: LA ROCHE, Ulrich, 8053 Zürich (CH); LA ROCHE, Hans, Lucas, 3939 Eggersberg (CH)
(74) Vertreter: Frei, Alexandra Sarah
(86) Internationale Anmeldenummer: CH9600432
(87) Internationale Veröffentlichungsnummer: WO9721931

(56) Entgegenhaltungen:
- EP-A- 0 543 647
- WO-A-80/01673
- US-A- 3 741 285
- JOURNAL OF AIRCRAFT, Bd. 27, Nr. 3, 1.März 1990, WASHINGTON, DC, US, Seiten 283-285, XP000136419 LIN J C ET AL: "CONTROL OF TURBULENT SEPARATED FLOW OVER A REARWARD-FACING RAMP USING LONGITUDINAL GROOVES"

## Beschreibung

Die Erfindung betrifft ein Verfahren gemäss dem Oberbegriff des ersten unabhängigen Patentanspruchs. Das Verfahren dient zur Ausbildung einer festen Oberfläche für den Kontakt mit einem fliessenden Medium. Ferner betrifft die Erfindung einen Körper mit Oberflächenbereichen, die nach dem erfindungsgemässen Verfahren ausgebildet sind. Ein derartiger Körper ist beispielsweise ein Tragflügel, ein Propeller, ein Ventilatorflügel, eine Turbinenschaufel oder auch ein Rührkörper. Es kann sich auch um einen die Strömung ganz oder teilweise umhüllenden Körper, wie zum Beispiel einen Diffusor handeln.

Es ist bekannt, dass laminare Strömungen bei einer örtlichen Reynoldsschen Zahl, die kleiner ist als ca. 200'000, und bei einem positiven Druckgradienten (Druck in Strömungsrichtung steigend) nicht an einer Oberfläche anliegen sondern von dieser abreissen.

Das klassische Flügelprofil mit einer glatten oder rauhen Oberfläche ist aus diesem Grunde nur oberhalb einer minimalen Reynoldsschen Zahl anwendbar. Unterhalb dieser minimalen Reynoldsschen Zahl reisst die laminare Strömung der Grenzschicht auf der Saugseite im Bereiche der Profil-Vorderkanten ab. Derselbe Tatbestand beschränkt nicht nur die Anwendung von Tragflügeln, Propellern etc. sondern auch die Rührwirkung von Rührkörpern, mit denen in relativ zähen Medien laminare Strömungen erzeugt werden. Ferner beschränkt dieser Tatbestand auch die Druckrückgewinnung in Diffusoren.

Die Erfindung stellt sich nun die Aufgabe, ein Verfahren anzugeben, mit dem Oberflächen für den Kontakt mit einem strömenden Fluid derart ausgebildet werden, dass eine laminare Strömung des Fluids sich weniger leicht von der Oberfläche ablöst, das heisst, dass die laminare Strömung auch bei örtlichen Reynoldsschen Zahlen von weniger als 200'000 und bei positivem Druckgradienten an der Oberfläche anliegt. Die Erfindung stellt sich ferner die Aufgabe, Körper zu schaffen, die nach dem Verfahren ausgebildete Oberflächenbereiche aufweisen und die dadurch bei kleineren Reynoldsschen Zahlen vorteilhafter anwendbar sind als entsprechende bekannte Körper.

Diese Aufgabe wird gelöst durch das Verfahren zur Ausbildung von Oberflächen für den Kontakt mit strömenden Medien und durch den Körper mit entsprechend ausgebildeten Oberflächenbereichen, wie sie beide durch die Patenansprüche definiert sind.

Erfindungsgemäss wird die Oberfläche für den Kontakt mit einem strömenden Fluid mit einer Mehrzahl von Rillen versehen, welche Rillen schief zur Strömungsrichtung ausgerichtet sind und welche Rillen einen stromaufwärts gerichteten, geschlossenen Eingang und einen stromabwärts gerichteten offenen Ausgang haben. Die Ausrichtung der Rillen relativ zur Strömungsrichtung sowie ihre Länge, Breite und Tiefe und ihr Abstand voneinander sind den Strömungsverhältnissen anzupassen, wie weiter unten beschrieben wird.

Die Rillen werden beispielsweise in die Oberfläche eingearbeitet oder die Oberfläche wird mit einem entsprechend strukturierten Belag belegt.

Es zeigt sich, dass eine laminare Strömung beim Überströmen der erfindungsgemäss ausgebildeten Oberfläche in den Rillen einerseits einen Unterdruck erzeugt, durch den die Strömung besser an der Oberfläche anliegt. Andererseits strömt das Fluid wenigstens teilweise nicht direkt an der festen Oberfläche entlang sondern über das sich in den Rillen befindende Fluid, das nicht strömt oder langsamer und/oder anders gerichtet strömt Dadurch wird die Hauptströmung mindestens über den Rillen zum Freistrahl, in dessen Grenzbereich Scherkräfte auftreten, die insbesondere bei kleinen Reynoldsschen Zahlen wesentlich kleiner sind als die Reibkräfte an einer festen Oberfläche. Dies führt dazu, dass der Reibungsverlust einer Strömung über die gerillte Oberfläche des erfindungsgemässen Körpers bedeutend geringer ist als der entsprechende Verlust einer gleichen Strömung über eine glatte oder rauhe Oberfläche.

Erfindungsgemäss ausgebildete Oberflächen werden vorteilhafterweise angewendet auf der Saugseite von Flügelprofilen im Bereiche der Profilvorderkanten, insbesondere im Bereiche von Steuerklappen. Axialgebläse mit erfindungsgemäss ausgebildeten Oberflächen sind anwendbar bei kleineren Reynoldsschen Zahlen als bisher, das heisst in Bereichen, in denen bis anhin Radialgebläse oder volumetrische Pumpenkonzepte notwendig waren. Kleinflugkörper, für die bis anhin relativ grosse Tragflächen mit langen Sehnenlängen (Profiltiefe) anzuwenden waren, sind mit erfindungsgemäss ausgebildeten Oberflächenbereichen vorteilhafter ausbildbar. Auch die Oberflächen von Eingangsbereichen von Diffusoren können erfindungsgemäss ausgebildet sein, wodurch sich deutlich bessere Druckrückgewinne erzielen lassen. Rührkörper mit erfindungsgemäss ausgebildeten Oberflächen oder Oberflächenbereichen ergeben vor allem in Medien mit einer relativ hohen kinematischen Zähigkeit eine besser anliegende Strömung und damit eine stark verbesserte Rührwirkung.

Die erfindungsgemässe Ausbildung von Oberflächen für den Kontakt mit einem strömenden Fluid, die Wirkung dieser Ausbildung und deren Auslegung werden anhand der folgenden Figuren im Detail beschrieben. Dabei zeigt:
- **Figur 1**: ein Flügelprofil mit einem erfindungsgemäss ausgebildeten Oberflächenbereich auf der Saugseite im Bereiche der Anströmkante;
- **Figuren 2 und 3**: schematische Darstellungen der Funktionsweise von erfindungsgemäss ausgebildeten Oberflächen;
- **Figur 4**: ein Diagramm zur Quantifizierung der erfindungsgemässen Ausbildung von Oberflächen für den Kontakt mit einem strömenden Fluid;
- **Figuren 5 bis 7**: weitere, beispielhafte Varianten der erfindungsgemässen Oberflächenausbildung;
- **Figuren 8 und 9**: zwei beispielhafte Ausführungsformen von Oberflächenbelägen, anwendbar zur erfindungsgemässen Ausbildung der saugseitigen Oberflächen von Tragflügeln gemäss Figur 1.

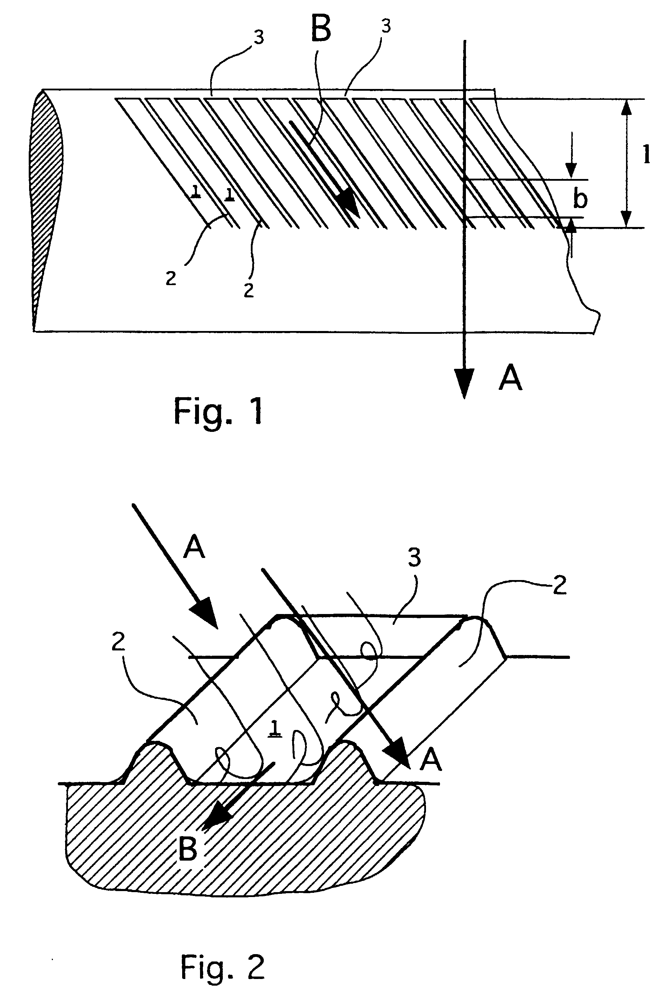

**Figur 1** zeigt schematisch ein Flügelprofil, dessen saugseitige Oberfläche im Bereiche der angeströmten Vorderkante V erfindungsgemäss ausgebildet ist. Die Anströmrichtung ist mit dem Pfeil A bezeichnet Der erfindungsgemäss ausgebildete Oberflächenbereich weist eine Rillenstruktur auf, die im dargestellten Falle aus einer Mehrzahl von parallel zueinander ausgerichteten, im wesentlichen geradlinig verlaufenden Rillen 1 besteht, die sich zwischen Längsdämmen 2 erstrecken und die schief zur Strömungsrichtung A ausgerichtet sind (Rillenausrichtung B). Die stromaufwärts gerichteten Eingänge der Rillen, die sich im vorderen Teil des Profils befinden, sind mit entsprechenden Querdämmen 3 verschlossen, die stromabwärts gerichteten Ausgänge sind offen. Es erweist sich als vorteilhaft, wenn die Längsdämme 2 schmaler als die Rillen und abgerundet ausgestaltet sind.

**Figur 2** zeigt in dreidimensionaler Darstellung den mit einem Querdamm 3 geschlossenen Eingang einer Rille 1 einer erfindungsgemäss ausgebildeten Oberfläche. Die Rille 1 erstreckt sich zwischen zwei Längsdämmen 2 in Rillenausrichtung B von ihrem stromaufwärts gerichteten Eingang zu ihrem weiter stromabwärts liegenden Ausgang. Die Strömungsrichtung A steht schief zur Rillenausrichtung B. Aus der Figur ist ersichtlich, wie die Komponente der Reibung das Medium im Totwasser der Rille in Rillenausrichtung B gegen den Rillenausgang (nicht dargestellt) pumpt, wodurch in der Rille ein Unterdruck entsteht.

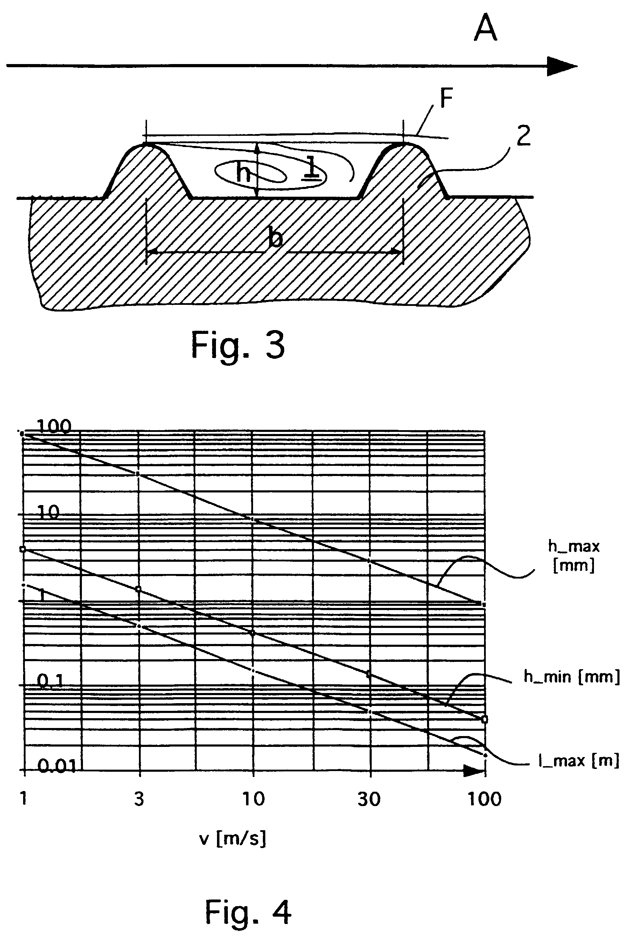

**Figur 3** zeigt in einer Schnittdarstellung (Schnittebene parallel zur Strömungsrichtung A) dieselbe Rinne 1, die auch in der Figur 2 dargestellt ist. Es sind daraus von den Parametern der Rillenstruktur die Rillentiefe h und die Rillenbreite b in Strömungsrichtung (inklusive Längsdammbreite) ersichtlich. In der Figur 1 ist als weiterer Parameter die Rillenlänge 1 eingetragen. Man erkennt ferner die Freistrahlgrenze F, entlang derer die Strömung sich von Längsdamm zu Längsdamm (2) fortsetzt. Da, wie bereits eingangs erwähnt, in der Grenzschicht zwischen dem in den Rillen gefangen Fluid und dem als Freistrahl darüber strömenden Fluid bedeutend weniger Reibung entsteht als in der Grenzschicht zwischen der festen Oberfläche der Längsdämme und dem strömenden Fluid, sind die Längsdämme, wie dargestellt, möglichst schmal auszubilden.

**Figur 4** zeigt ein Diagramm zur Quantifizierung der erfindungsgemässen Oberflächenausbildung. Das Diagramm zeigt für Luft als strömendes Fluid in Abhängigkeit von der Strömungsgeschwindigkeit v [m/s] die Parameter der Rillenstruktur: die maximale Rillentiefe hₘₐₓ [mm], die minimale Rillentiefe hₘᵢₙ [mm] und die maximale Rillenlänge lₘₐₓ [m] (parallel zur Strömungsrichtung). Das Diagramm ergibt sich daraus, dass die Reynoldssche Zahl gebildet mit der Rillentiefe h für eine laminare Strömung kleiner sein muss als 6'000. Die Rillenbreite b (in Strömungsrichtung A) ergibt sich daraus, dass diese nicht mehr als 6 bis 12 mal die Rillentiefe sein darf, damit die entstehende Freistrahlgrenze die ganze Rillenbreite überdeckt.

Das Diagramm der Figur 4 gilt für eine kinematische Zähigkeit ν von 1,5•10⁻⁵ (Luft auf Meereshöhe), für andere Medien sind die Ordinatenwerte mit (ν/1,5•10⁻⁵) zu multiplizieren.

Als Beispiel ist aus der Figur 4 für eine Strömungsgeschwindigkeit von 3 m/s, wie sie für einen kleinen Luftventilator üblich ist, eine maximale Rillenlänge (laminare Lauflänge) von 0,5m, eine Rillentiefe b von minimal 1,5mm und maximal 30mm ersichtlich.

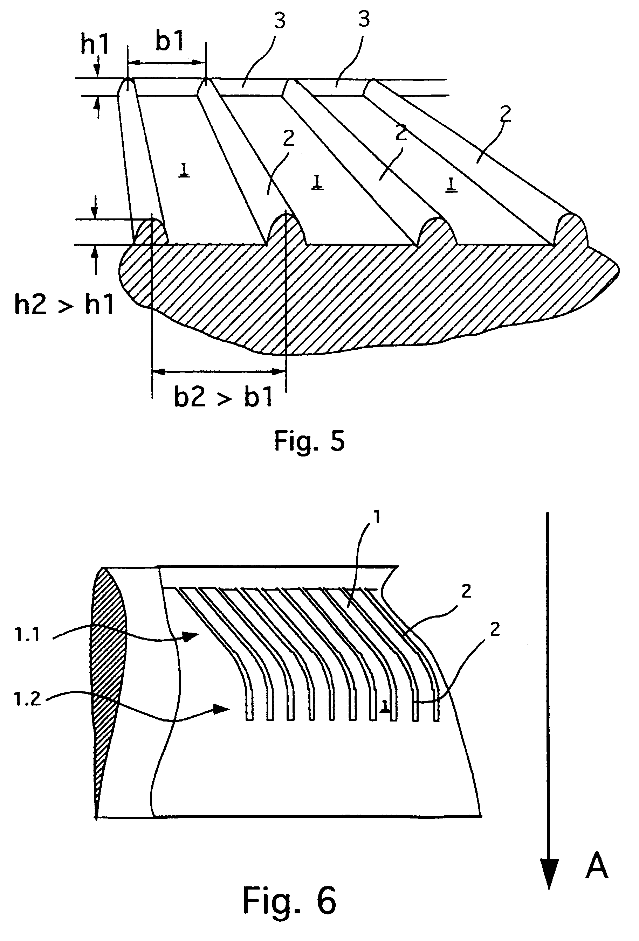

**Figur 5** zeigt eine erfindungsgemäss ausgebildete Oberfläche für den Kontakt mit einem strömenden Fluid. Die Rillen, die in dieser Oberfläche ausgebildet sind, werden in Rillenausrichtung B, also gegen ihren Ausgang breiter und tiefer (b.2 > b.1, h.2 > h.1), das heisst der Rillenquerschnitt wird in Rillenausrichtung B grösser. In derselben Art sind auch Rillenstrukturen mit sich nur verbreiternden oder sich nur vertiefenden Rillen denkbar.

**Figur 6** zeigt eine erfindungsgemäss ausgebildete Oberfläche eines Tragflügels mit gekrümmten Rillen 1, die nur in ihrem Eingangsbereich 1.1 schief zur Strömungsrichtung A verlaufen und deren Ausgangsbereich 1.2 im wesentlichen parallel zur Strömungsrichtung A ausgerichtet ist, um den Übergang zum folgenden Wandbereich ohne Rillen zu verbessern.

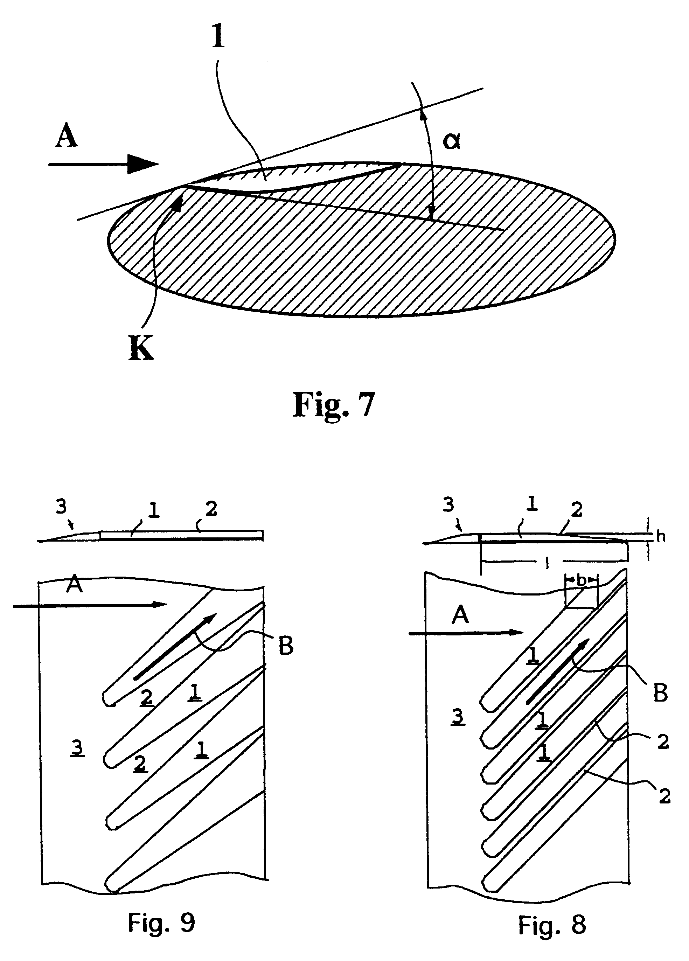

An Oberflächen mit einer geringen Krümmung ist es vorteilhaft, die Rilleneingänge mit einem effektiven Querdamm zu verschliessen, wie er in den Figuren 2 und 6 dargestellt ist. An Oberflächen mit einer stärkeren Krümmung genügt es, am Rilleneingang als Verschluss eine Kante vorzusehen, durch die ein endlicher Einstiegswinkel α des Rillenbodens definiert ist. Dies wird durch die Figur 7 illustriert, die einen Schnitt in Rillenausrichtung durch ein ellipsoides Tragflügelprofil darstellt. Die geschnittene Rille 1 beginnt an der Einstiegskante K, die im Bereiche des geringsten Druckes angeordnet ist, und erstreckt sich mit abnehmender Tiefe gegen hinten. Ihr Ausgang bildet sich durch einen kontinuierlichen Übergang des Rillenbodens in die Profiloberfläche.

Wie bereits eingangs erwähnt, kann eine Oberfläche für den Kontakt mit einem strömenden Fluid durch entsprechende Formung erfindungsgemäss ausgebildet werden oder sie kann mit einem entsprechenden Belag belegt werden. **Figuren 8 und 9** zeigen beispielhafte Ausführungsformen derartiger, streifenförmiger Beläge, wie sie beispielsweise an Tragflügeln eingesetzt werden können, wo sie vorteilhafterweise im wesentlichen parallel zur Profilvorderkante aufgebracht werden. Die Beläge sind in den Figuren 8 und 9 als Draufsicht und als Schnitt in Rillenausrichtung B dargestellt.

Beispielhafte Parameter für die in den Figuren 8 und 9 dargestellten, streifenförmigen Oberflächenbeläge sind für eine Strömungsrichtung A bei einer Luftströmung (Normaldruck) von v = ca. 100km/h für den Belag der Figuren 8: Rillenlänge l = 20mm, Rillenbreite b = 5mm, Rillentiefe h = 1,5mm, Winkel zwischen Rillenausrichtung und Strömungsrichtung ca 45°; und für den Belag der Figur 9: Rillenlänge l = 20mm, Rillenbreite b = ca. 8mm (inklusive Breite des Längsdammes), Rillentiefe h = 1,5mm, Winkel zwischen Rillenausrichtung und Strömungsrichtung ca 45°.

Aus den Figuren 8 und 9 ist auch ersichtlich, dass der Querdamm 3 vorteilhafterweise auf seiner stromaufwärts gerichteten Seite stromlinienförmig ausgebildet ist und dass die Längsdämme über die ganze Rillenlänge gleich hoch (Figur 9), das heisst die Rillentiefe h konstant ist, oder dass die Längsdämme eine in Strömungsrichtung abnehmende Höhe (Figur 8), bzw. die Rillen eine abnehmende Tiefe haben.

Die Oberflächenbeläge gemäss Figuren 8 und 9 sind vorteilhafterweise aus einem Kunststoff hergestellt, der derart flexibel ist, dass er sich der erfindungsgemäss auszubildenden Oberfläche anpassen kann. Sie werden vorteilhafterweise in relativ grossen Längen fabriziert und für die Anwendung in geeignete Längen geschnitten.

Tragflächen werden in den vorderen Tragflügelbereichen mit kleinen örtlichen Reynoldsschen Zahlen, in welchen Bereichen sich Verschmutzungen in sehr empfindlicher Weise grenzschichtablösend auswirken, mit Belägen, wie sie in den Figuren 8 und 9 dargestellt sind, belegt, wodurch Verschmutzungs-bedingte Grenzschichtablösungen weitgehend verhindert werden können.

## Patentansprüche

1. Verfahren zur Ausbildung einer Oberfläche für den Kontakt mit einem Fluid, das in einer Strömungsrichtung (A) über die Oberfläche strömt, **dadurch gekennzeichnet**, dass zur Verhinderung von Strömungsablösungen bei tiefen örtlichen Reynoldsschen Zahlen die Oberfläche mit Rillen (1) versehen wird, die sich zwischen einem stromaufwärts gerichteten geschlossenen Rilleneingang und einem stromabwärts gerichteten offenen Rillenausgang erstrecken und die mindestens im Bereich des Rilleneingangs schief zur Strömungsrichtung (A) gerichtet sind.

2. Verfahren nach Anspruch 1, **dadurch gekennzeichnet**, dass ein Körper mit einem Belag belegt wird, auf dem die Rillen (1) ausgebildet sind.

3. Verfahren nach einem der Ansprüche 1 oder 2, **dadurch gekennzeichnet**, dass die Rillentiefe (h) und/oder die Rillenbreite (b) vom stromaufwärts gerichteten Rilleneingang zum stromabwärts gerichteten Rillenausgang zunimmt.

4. Verfahren nach einem der Ansprüche 1 bis 3, **dadurch gekennzeichnet**, dass die Rillen (1) gekrümmt sind und im Bereiche des stromabwärts gerichteten Rillenausganges parallel zur Strömungsrichtung ausgerichtet sind.

5. Belag mit Rillen (1) zum Aufbringen auf einen Körper, welcher Belag nach dem Verfahren nach einem oder mehreren der Ansprüche 1 bis 4 ausgebildet ist.

6. Belag nach Anspruch 5, **dadurch gekennzeichnet**, dass er flexibel und dadurch auf verschieden gekrümmten Körpern anbringbar ist.

7. Körper mit mindestens einem Oberflächenbereich, der gemäss einem oder mehreren der Ansprüche 1 bis 4 ausgebildet ist, **dadurch gekennzeichnet**, dass er Rillen (1) aufweist, die sich zwischen einem stromaufwärts gerichteten geschlossenen Rilleneingang und einem stromabwärts gerichteten offenen Rillenausgang erstrecken und mindestens im Bereich des Rilleneingangs schief zu einer für den Oberflächenbereich vorgesehenen Strömungsrichtung (A) gerichtet sind.

8. Körper nach einem der Anspruch 7, **dadurch gekennzeichnet**, dass der mit den Rillen (1) versehene Oberflächenbereich auf der als Unterdruckseite vorgesehenen Seite des Körpers liegt.

9. Körper nach einem der Ansprüche 7 oder 8, **dadurch gekennzeichnet**, dass er ein Tragflügel, ein Propeller oder ein Rührkörper ist.

10. Körper nach einem der Ansprüche 7 oder 8, **dadurch gekennzeichnet**, dass er ein Flügelprofil ist und dass er die Rillenstruktur im Bereiche der Anströmkante aufweist.

11. Körper nach einem der Ansprüche 7 oder 8, **dadurch gekennzeichnet**, dass er eine verzögerte Strömung mit einer Innenoberfläche mindestens teilweise umschliesst und dass diese Innenoberfläche im Bereiche kleiner örtlicher Reynolsscher Zahlen die Rillenstruktur aufweist.

## Claims

1. Method of designing a surface for contact with a fluid which flows over the surface in a flow direction (A), characterized in that, to prevent flow separations at low local Reynolds numbers, the surface is provided with grooves (1) which extend between a closed groove inlet directed upstream and an open groove outlet directed downstream and which are directed at an angle to the flow direction (A) at least in the region of the groove inlet.

2. Method according to Claim 1, characterized in that a body is covered with a lining on which the grooves (1) are formed.

3. Method according to either of Claims 1 and 2, characterized in that the groove depth (h) and/or the groove width (b) increases from the groove inlet directed upstream to the groove outlet directed downstream.

4. Method according to one of Claims 1 to 3, characterized in that the grooves (1) are curved and are oriented parallel to the flow direction in the region of the groove outlet directed downstream.

5. Lining with grooves (1) for applying to a body, which lining is designed according to the method according to one or more of Claims 1 to 4.

6. Lining according to Claim 5, characterized in that it is flexible and can therefore be attached to various curved bodies.

7. Body having at least one surface region which is designed according to one or more of Claims 1 to 4, characterized in that it has grooves (1) which extend between a closed groove inlet directed upstream and an open groove outlet directed downstream and which are directed at an angle to a flow direction (A) intended for the surface region at least in the region of the groove inlet.

8. Body according to Claim 7, characterized in that the surface region provided with the grooves (1) lies on that side of the body which is intended as the vacuum side.

9. Body according to either of Claims 7 and 8, characterized in that it is an aerofoil wing, a propeller or an agitator body.

10. Body according to either of Claims 7 and 8, characterized in that it is an aerofoil profile, and in that it has the groove structure in the region of the leading edge.

11. Body according to either of Claims 7 and 8, characterized in that it at least partly encloses a decelerated flow with an inner surface, and in that this inner surface has the groove structure in the region of low local Reynolds numbers.

## Revendications

1. Procédé de mise en forme d'une surface prévue pour être en contact avec un fluide qui balaie la surface dans une direction d'écoulement (A), caractérisé en ce que pour empêcher des décollements d'écoulement au cas où le nombre de Reynolds est localement bas, la surface est dotée de rainures (1) qui s'étendent entre une entrée fermée de rainure située en amont dans la direction de l'écoulement et une sortie ouverte de rainure située en aval dans la direction de l'écoulement, et qui sont, au moins dans la zone de l'entrée des rainures, orientées obliquement par rapport à la direction d'écoulement (A).

2. Procédé selon la revendication 1, caractérisé en ce qu'un corps est garni d'une couche sur laquelle les rainures (1) sont formées.

3. Procédé selon l'une des revendications 1 ou 2, caractérisé en ce que la profondeur (h) des rainures et/ou la largeur (b) des rainures augmentent depuis l'entrée des rainures située en amont dans la direction de l'écoulement jusqu'à la sortie des rainures située en aval dans la direction de l'écoulement.

4. Procédé selon l'une des revendications 1 à 3, caractérisé en ce que les rainures (1) sont incurvées et sont orientées parallèlement à la direction de l'écoulement dans la zone de la sortie des rainures située en aval dans la direction de l'écoulement.

5. Couche dotée de rainures (1), destinée à être appliquée sur un corps, laquelle couche est formée par le procédé selon l'une ou plusieurs des revendications 1 à 4.

6. Couche selon la revendication 5, caractérisée en ce qu'elle est flexible et qu'elle peut ainsi être appliquée sur différents corps courbes.

7. Corps comportant au moins une zone de surface qui est configurée selon l'une ou plusieurs des revendications 1 à 4, caractérisé en ce qu'il présente des rainures (1) qui s'étendent entre une entrée fermée de rainure située en amont dans la direction de l'écoulement et une sortie ouverte de rainure située en aval dans la direction de l'écoulement et qui, au moins dans la zone de l'entrée des rainures, sont orientées obliquement par rapport à une direction d'écoulement (A) prévue pour la zone de surface.

8. Corps selon la revendication 7, caractérisé en ce que la zone de surface dotée des rainures (1) est située sur le côté du corps qui est prévu comme côté en dépression.

9. Corps selon l'une des revendications 7 ou 8, caractérisé en ce qu'il est une aile porteuse, une hélice ou un corps de brassage.

10. Corps selon l'une des revendications 7 ou 8, caractérisé en ce qu'il est un profil d'aile et en ce qu'il présente la structure à rainures dans la zone du bord d'attaque.

11. Corps selon l'une des revendications 7 ou 8, caractérisé en ce qu'il entoure au moins en partie un écoulement ralenti par une surface intérieure, et en ce que cette surface intérieure présente la structure à rainures dans la zone où les nombres de Reynolds sont localement plus petits.
